# EUROPÄISCHE PATENTANMELDUNG

(11) **EP 3 103 582 A2**
(43) Veröffentlichungstag der Anmeldung: **14.12.2016**
(21) Anmeldenummer: 16168663.9
(22) Anmeldetag: 06.05.2016
(51) Int. Cl.: B23Q 3/157, B23Q 3/155

(54) **BEARBEITUNGSMASCHINE MIT WERKZEUGÜBERGABEVORRICHTUNG**

(30) Priorität: 08.05.2015 DE 102015107257
(71) Anmelder: Grob-Werke GmbH & Co. KG, 87719 Mindelheim (DE)
(72) Erfinder: GROB, Burkhart, Dr. h.c., 86825 Bad Wörishofen (DE)
(74) Vertreter: Pfister & Pfister Patent- und Rechtsanwälte

(57) **Zusammenfassung**

Werkzeugübergabevorrichtung, welche mindestens einen ersten (41) und einen zweiten Arm (42) aufweist, die durch ein Armgelenk (41a) um eine Armgelenkachse (411) dreh- und positionierbar ist und der zweite Arm (42) einen Werkzeugwechsler (49) trägt, **dadurch gekennzeichnet, dass** zumindest an einem Arm (41) ein Schwenkgelenk (5) vorgesehen ist, das eine positionierbare Schwenkbewegung um eine Schwenkachse (50) erlaubt und Schwenkachse (50) und Armgelenkachse (411) winklig, insbesondere rechtwinklig zueinander orientiert sind.

## Beschreibung

Die Erfindung betrifft eine Bearbeitungsmaschine, insbesondere für die spanende Bearbeitung eines Werkstückes, wobei eine Motorspindel für den rotativen Antrieb eines Werkzeuges um eine Spindelachse vorgesehen ist und die Bearbeitungsmaschine ein Werkzeugmagazin und die Bearbeitungsmaschine eine Werkzeugübergabevorrichtung aufweist, die dazu vorgesehen ist, ein Werkzeug von dem Werkzeugmagazin zur Werkzeugaufnahme der Motorspindel und/oder zurück zu transportieren.

Die Erfindung betrifft auch ein Werkzeugmagazin für eine vorgenannte Bearbeitungsmaschine sowie eine Werkzeugübergabevorrichtung, welche mindestens einen ersten und einen zweiten Arm aufweist, die durch ein Armgelenk um eine Armgelenkachse dreh- und positionierbar ist und der zweite Arm einen Werkzeugwechsler trägt.

Die eingangs beschriebene Bearbeitungsmaschine soll hocheffizient Werkstücke spanabhebend bearbeiten. Um eine möglichst effiziente Bearbeitung zu erreichen, ist es wünschenswert, möglichst viele verschiedene, bei dem Bearbeitungsprozess benötigte, Werkzeuge in einem Werkzeugmagazin in nächster Nähe der Motorspindel vorzuhalten, denn dadurch wird die Zeit für das Wechseln des Werkzeuges reduziert und die Effizienz der Maschine entsprechend gesteigert. Im Stand der Technik sind hierzu Bearbeitungsmaschinen bekannt, bei welchen eine stehende Magazinscheibe eines Werkzeugmagazins seitlich neben der Motorspindel angeordnet ist. Eine solche Anordnung bietet bereits den Vorteil, dass in nächster Nähe zu der Motorspindel eine größere Anzahl von Werkzeugen vorgehalten werden können, allerdings ist der Platzbedarf einer solchen Bearbeitungsmaschine groß und erhöht sich noch erheblich weiter, wenn in einer Magazinscheibe mit größeren Durchmessern eine größere Anzahl von Werkzeugen vorgehalten werden sollen.

Es ist Aufgabe der vorliegenden Erfindung diesen Stand der Technik zu verbessern.

Zur Lösung dieser Aufgabe schlägt die Erfindung zunächst eine Werkzeugübergabevorrichtung, wie eingangs beschrieben, vor, die sich dadurch auszeichnet, dass zumindest an einem Arm ein Schwenkgelenk vorgesehen ist, das eine positionierbare Schwenkbewegung um eine Schwenkachse erlaubt und Schwenkachse und Armgelenkachse winklig zueinander, insbesondere rechtwinklig zueinander orientiert sind. Die vorgeschlagene konstruktive Lösung führt zu einer Werkzeugübergabevorrichtung, die um eine zusätzliche Achse beweglicher ist und so auch kompliziertere Bewegungen in einer platzsparenden Bauweise realisieren kann. Insbesondere gelingt es mit dieser höheren Beweglichkeit auch überlange Werkzeuge in Normalmaschinen einzusetzen, für die bislang eine Sondermaschine notwendig war. Dies senkt die Kosten für den Bau einer solchen Bearbeitungsmaschine. Die höhere Beweglichkeit der erfindungsgemäß vorgeschlagenen Werkzeugübergabevorrichtung erhöht überraschenderweise auch die Werkstückwechselzeiten um ca. 25 %, was die Effizienz einer solch ausgestatteten Bearbeitungsmaschine entsprechend steigert.

Dabei ist der Begriff winklig bzw. rechtwinklig nicht auf die geometrische Anordnung beschränkt, dass sich die Schwenkachse und die Armgelenkachse schneiden, sondern auch windschiefe Anordnungen dieser beiden Achsen sind hierdurch definiert. Bei einer windschiefen, aber winkligen Anordnung wird die erste Achse (sei es die Schwenkachse oder die Armgelenkachse) eine Normalenfläche, die zur Armgelenk- oder Schwenkachse rechtwinklig orientiert ist, in einen spitzen Winkel schneiden. Bei einer rechtwinkligen, windschiefen Anordnung wird die Normalenfläche parallel zur ersten Achse verlaufen.

Die eingangs beschriebene Aufgabe wird aber auch durch ein Werkzeugmagazin gelöst, das zumindest aus einer um eine vertikal orientierte Drehachse dreh- und positionierbare Magazinscheibe besteht, die an ihrem Scheibenumfang eine Mehrzahl von Werkzeugaufnahmen für die Aufnahme von Werkzeugen aufweist. Eine solche liegende Anordnung des Werkzeugmagazins baut deutlich platzsparender wie eine Anordnung, bei welcher die stehende Magazinscheibe um eine horizontal orientierte Drehachse dreht. Dabei ist zu beachten, dass eine große Anzahl von Werkzeugen dann in einem solchen Werkzeugmagazin vorgehalten werden können, wenn für die Magazinscheibe ein größerer Durchmesser gewählt wird. Bei der stehenden Anordnung des Werkzeugmagazins wird das Ziel einer platzsparenden Bauweise deutlich verfehlt, wohingegen der vorbeschriebene erfindungsgemäße Ansatz eine platzsparende Bauweise mit einer hohen Anzahl an der Motorspindel unmittelbar verfügbarer, und daher schnell ein- und auswechselbaren Werkzeuge kombiniert.

Zu dem vorbeschriebenen erfindungsgemäßen Ansatz einer liegend orientierten Magazinscheibe äquivalent ist ein Vorschlag, bei welchem das Werkzeugmagazin gebildet ist von einer umlaufenden, werkzeugtragenden Transportkette, wobei diese umlaufende Transportkette eine im wesentlichen horizontal orientierte Fläche begrenzt.

Insbesondere kombiniert eine Bearbeitungsmaschine, die mit einer Werkzeugwechselvorrichtung und einem Werkzeugmagazin, das wie ebenfalls oben beschrieben ist, ausgestattet ist, die vorbeschriebenen Vorteile. Daher umfasst die Erfindung auch eine Bearbeitungsmaschine, insbesondere für die spanende Bearbeitung eines Werkstückes, wobei eine Motorspindel für den rotativen Antrieb eines Werkzeuges um eine Spindelachse vorgesehen ist, und die Bearbeitungsmaschine ein Werkzeugmagazin, das insbesondere wie oben beschrieben ist und das sich vertikal oberhalb der Motorspindel befindet, und die Bearbeitungsmaschine eine Werkzeugübergabevorrichtung, die insbesondere wie oben beschrieben ist, aufweist, diese dazu vorgesehen sind, ein Werkzeug von dem Werkzeugmagazin zur Werkzeugaufnahme der Motorspindel und/oder zurück zu transportieren.

Eine solche, erfindungsgemäß ausgestattete Bearbeitungsmaschine benötigt im Vergleich mit vergleichbar ausgestatteten Bearbeitungsmaschinen nach dem Stand der Technik ca. 20 % weniger Stellfläche, was die Kosten für die Realisierung entsprechender Bearbeitungslinien senkt.

Die erfindungsgemäße Bearbeitungsmaschine eröffnet auch die Möglichkeit insgesamt kompakter, also mit geringerer Bauhöhe zu bauen, was insbesondere den Realisierungsaufwand bei einer Portalverkettung der einzelnen Bearbeitungsmaschinen senkt.

Obwohl eine erfindungsgemäß ausgestattete Bearbeitungsmaschine weniger Stellfläche benötigt, ist es möglich, durch die geschickte Anordnung des liegenden Werkzeugmagazins oberhalb der Motorspindel, in unmittelbarer Nähe zur Motorspindel, ca. 50 % mehr Werkzeuge vorzuhalten. Überraschenderweise kombiniert die Erfindung somit höhere Flexibilität mit geringerem Verbrauch von Stellfläche, was sich sonst gegenseitig ausschließt!

Das erfindungsgemäße Konzept vereint somit bei gleicher zur Verfügung stehenden Zerspanleistung der Bearbeitungsmaschine einen geringeren Platzbedarf mit höherer Effizienz und höherer Flexibilität bzw. Variabilität bei der Bearbeitung!

Bei einer bevorzugten Ausgestaltung der Werkzeugübergabevorrichtung ist vorgesehen, dass zwischen dem ersten und dem zweiten Arm mindestens ein weiterer, dritter Arm vorgesehen ist, der über ein zweites Armgelenk um eine zweite Armgelenkachse dreh- und positionierbar ist. Bevorzugterweise, ohne aber die Erfindung hierauf beschränken zu wollen, ist die erste Armgelenkachse parallel orientiert zur zweiten Armgelenkachse. Durch eine solche Ausgestaltung wird eine noch höhere Beweglichkeit und somit auch Flexibilität der Werkzeugübergabevorrichtung erreicht. Natürlich umfasst der Vorschlag auch Lösungen, bei welchen neben dem dritten Arm noch weitere Arme (ein vierter, fünfter usw.) zwischen dem ersten und dem zweiten Arm angeordnet sind.

Des Weiteren ist in dem Vorschlag vorteilhafter Weise vorgesehen, dass die Armgelenkachsen zueinander parallel orientiert sind.

Des Weiteren ist vorgesehen, dass die Werkzeugübergabevorrichtung einen Armträger aufweist, der zumindest den ersten Arm trägt und das Schwenkgelenk, insbesondere zwischen dem Armträger und dem ersten Arm angeordnet ist.

Alternativ oder optional ist des Weiteren vorgesehen, dass das Schwenkgelenk zwischen dem zweiten Arm und dem Werkzeugwechsler vorgesehen ist.

Der erfindungsgemäße Vorschlag umfasst eine große Anzahl von Möglichkeiten, wo das Schwenkgelenk angeordnet werden kann. Üblicherweise weist die Werkzeugübergabevorrichtung einen Armträger auf, der relativ zu den Armen fest ist, aber gegebenenfalls linearbewegt, zum Beispiel höhenverstellbar ist. Der Vorschlag umfasst daher Lösungen, bei welchen sich das Schwenkgelenk zwischen dem Armträger und dem Werkzeugwechsler als letztes Element der Werkzeugwechselvorrichtung befindet, wobei auch eine Abfolge, bei welcher das Schwenkgelenk unmittelbar auf ein Armgelenk oder das Armgelenk unmittelbar auf ein Schwenkgelenk folgt, ebenfalls vorgesehen ist. Das Schwenkgelenk ist alternativ auch zwischen einzelnen Armen angeordnet. Der Vorschlag umfasst auch Lösungen, bei welchen mehr als ein Schwenkgelenk vorgesehen ist, wobei die jeweiligen Schwenkachsen dann zueinander parallel oder auch winklig orientiert sein mögen.

In einer vorteilhaften Ausgestaltung ist vorgesehen, dass zumindest ein Arm, insbesondere der dritte Arm, der zwischen dem ersten und zweiten Arm angeordnet ist, als Parallelogrammarm ausgebildet ist. Durch eine solche Ausgestaltung wird die Zustellbewegung einerseits horizontal zum Werkzeugmagazin und andererseits im geschwenkten Zustand vertikal zur Motorspindel erleichtert.

Geschickter Weise ist vorgesehen, dass an dem Armträger eine Anheb- und Absenkvorrichtung für die Arme vorgesehen ist. Eine Anheb- oder Absenkbewegung kann einerseits durch die Bewegung der Arme zueinander für das zu transportierende Werkzeug realisiert werden. Es ist aber auch möglich, dass die an dem Armträger angeordnete Armanordnung durch eine am Armträger vorgesehene Anheb- und Absenkvorrichtung zusätzlich eine vertikale oder schräge Bewegungsachse besitzt. Schlussendlich ist es auch möglich, dass die gesamte Werkzeugübergabevorrichtung, also auch der Armträger selber, anheb- bzw. absenkbar ist und hierfür eine entsprechende Vorrichtung vorgesehen ist. Es ist dabei vorgesehen, die Anheb- und Absenkvorrichtung zum Beispiel als Linearachse oder als Parallelogrammachse auszuführen. Vorzugsweise erfolgt die Anheb- oder Absenkbewegung parallel oder spitzwinklig zur Drehachse.

In einer weiteren bevorzugten Ausführungsform des Werkzeugmagazins ist vorgesehen, dass die Werkzeugaufnahme jeweils eine Aufnahmefläche begrenzt, deren Flächennormale parallel, winklig oder rechtwinklig zur Drehachse orientiert sind. Die Werkzeugaufnahme nimmt ein um eine Werkzeugachse rotativ antreibbares Werkzeug auf. Üblicherweise ist diese Werkzeugachse parallel zu der vorbeschriebenen Flächennormale orientiert. Die vorgeschriebene Ausführungsform gestattet eine hohe Variabilität in der Anordnung der einzelnen Werkzeuge in dem Werkzeugmagazin. Es ist dabei gemäß dem neuartigen Konzept auch möglich, unterschiedlich orientierte Werkzeugachsen bzw. Flächennormale in ein und demselben Werkzeugmagazin zu realisieren, wenn dies zum Beispiel zur Unterbringung von überlangen oder überbreiten Werkzeugen dienlich ist. Es ist insbesondere aufgrund der hohen Beweglichkeit der Werkzeugübergabevorrichtung problemlos möglich, auch unterschiedlich orientierte Werkzeuge aus einem Werkzeugmagazin zu entnehmen oder in dieses abzulegen.

Des Weiteren ist günstiger Weise vorgesehen, dass das Werkzeugmagazin zwei oder mehrere, je um dieselbe Drehachse jeweils einzeln, unabhängig voneinander, oder gemeinsam dreh- und positionierbare Magazinscheiben aufweist, welche jeweils gleiche Durchmesser oder von welchen mindestens zwei Magazinscheiben unterschiedliche Durchmesser aufweisen. Durch eine zweite oder weitere Magazinscheibe wird die Anzahl der oberhalb, im Bereich der Motorspindel bzw. deren Aufnahme vorhaltbaren Werkzeugen erhöht, wobei insbesondere vorgesehen ist, dass die Werkzeugübergabevorrichtung, während die Zerspannung läuft, das oder die im nächsten Bearbeitungsschritt benötigte/n Werkzeug/e aus höherliegenden Scheiben bereits in die unterste Scheibe umlagert, um dann einen möglichst schnellen Werkzeugwechsel ausführen zu können. Ein solcher Verfahrensaspekt gehört ebenfalls zur Erfindung.

Vorteilhafter Weise ist vorgesehen, dass sich unterhalb der Magazinscheibe eine Tropfwanne befindet. Aus der Motorspindel ausgewechselte Werkzeuge sind oftmals mit Schmier- und Kühlflüssigkeit und/oder Spänen verschmutzt, die dann in dem Werkzeugmagazin von dem Werkzeug abtropfen. Die Anordnung der Tropfwanne schützt die darunter liegende Motorspindel vor Verschmutzung und Spänen, die insbesondere den Betrieb der Motorspindel behindern können.

In einer weiteren bevorzugten Ausführungsform ist vorgesehen, dass das Werkzeugmagazin einen Tragarm aufweist, welcher die mindestens eine Magazinscheibe trägt, und an dem Tragarm eine Anheb- und Absenkvorrichtung für die mindestens eine Magazinscheibe vorgesehen ist. Diese zusätzliche Bewegungsachse erleichtert dass Ein- und Auswechseln von Werkzeugen.

Es ist dabei vorgesehen, dass zum Beispiel alle Magazinscheiben einheitlich durch eine Vorrichtung angehoben oder abgesenkt werden. Alternativ ist vorgesehen, dass die Magazinscheiben unabhängig voneinander bewegbar sind, wobei insbesondere auch eine, vorzugsweise die unterste Magazinscheibe feststehend ausgebildet sein kann. Des weiteren ist alternativ vorgesehen, dass das Werkzeugmagazin in Gänze, einschließlich dem Tragarm, durch die Vorrichtung anhebbar oder absenkbar ist. Alle diese Varianten zählen zum Vorschlag.

In einer vorteilhaften Ausgestaltung der Bearbeitungsmaschine ist vorgesehen, dass in vertikaler Richtung gesehen, die Spindelachse eine Sekante der Magazinscheibe des Werkzeugmagazins ist.

Des Weiteren ist in dem Vorschlag vorteilhafter Weise vorgesehen, dass sich die Werkzeugübergabevorrichtung zwischen dem Bearbeitungsraum der Bearbeitungsmaschine einerseits und der Spindel und Werkzeugmagazin andererseits befindet. Hieraus resultiert einerseits eine stellplatzsparende und andererseits eine wegoptimierte und damit effiziente Anordnung.

Bei einer bevorzugten Ausgestaltung des Vorschlags ist vorgesehen, dass eine Magazinsäule oder ein Magazinportal vorgesehen ist, die/das den Tragarm des Werkzeugmagazins und den Armträger der Werkzeugübergabevorrichtung trägt. Ein solcher Vorschlag spart Platz und Gewicht.

Des Weiteren ist vorgesehen, dass die Bearbeitungsmaschine zwei Motorspindeln aufweist, deren Spindelachsen parallel orientiert sind. Die Ausgestaltung einer Bearbeitungsmaschine mit zwei Motorspindeln erhöht die Zerspanungsleistung der Bearbeitungsmaschine. Geschickterweise wird dann jede Motorspindel mit einer eigenen Werkzeugübergabevorrichtung ausgestattet, um die Stillstandzeiten beim Werkzeugwechsel nicht zu erhöhen. Die beiden Werkzeugübergabevorrichtungen entnehmen dann beispielsweise aus einen gemeinsamen Werkzeugmagazin (das z.B. als Doppelscheibe ausgebildeten ist), das oberhalb der beiden Motorspindeln angeordnet ist, die benötigten Werkzeuge oder aber jeder Werkzeugübergabevorrichtung ist ein eigenständiges, jeweils unabhängiges Werkzeugmagazin zugeordnet.

Die vorteilhaft vorgeschlagene Ausgestaltung schließt nicht aus, das die beiden Motorspindeln von nur einer Werkzeugübergabevorrichtung mit Werkzeugen ver- und entsorgt werden. Der Vorschlag umfasst auch Lösungen, bei welcher mehr als nur zwei Motorspindeln vorgesehen sind.

Geschickter Weise ist vorgesehen, dass für eine Zuführbewegung eines Werkzeuges von dem Werkzeugmagazin zu der Werkzeugaufnahme der Motorspindel eine Überlagerung mindestens zweier der nachfolgenden Bewegungen vorgesehen sind:
- der Bewegung der Arme um die Armgelenkachsen
- der Schwenkbewegung um die Schwenkachse,
- der Anheb- oder Absenkbewegung der Anheb- und Absenkvorrichtung.

Natürlich umfasst dieser Vorschlag in gleicher Weise auch das Auswechseln des Werkzeuges aus der Motorspindel. Durch die geschickte Überlagerung der vorgenannten Bewegungen kann eine schnelle Ein- und Auswechselbewegung realisiert werden.

In einer weiteren bevorzugten Ausführungsform ist vorgesehen, dass die Schwenkachse, die Drehachse und die Spindelachse je zueinander rechtwinklig orientiert sind.

In der Zeichnung ist die Erfindung insbesondere in einem Ausführungsbeispiel schematisch dargestellt. Es zeigen:
- Fig. 1: eine Seitenansicht der erfindungsgemäße Bearbeitungsmaschine
- Fig. 2: eine Draufsicht nach Figur 1
- Fig. 3a, b: je in einer Seitenansicht Details des Werkzeugmagazins nach der Erfindung in verschiedenen Stellungen
- Fig. 4a,b,c: eine erste Stellung des Werkzeugwechselprozesses in einer erfindungsgemäßen Bearbeitungsmaschine in Draufsicht (Fig. 4a), Seitenansicht (Fig. 4b) und Frontansicht (Fig. 4c)
- Fig. 5a,b: eine zweite Stellung des Werkzeugwechselprozesses in einer erfindungsgemäßen Bearbeitungsmaschine in Seitenansicht (Fig. 5a) und Frontansicht (Fig. 5b)
- Fig. 6a,b: eine dritte Stellung des Werkzeugwechselprozesses in einer erfindungsgemäßen Bearbeitungsmaschine in Seitenansicht (Fig. 6a) und Frontansicht (Fig. 6b)

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen ist sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

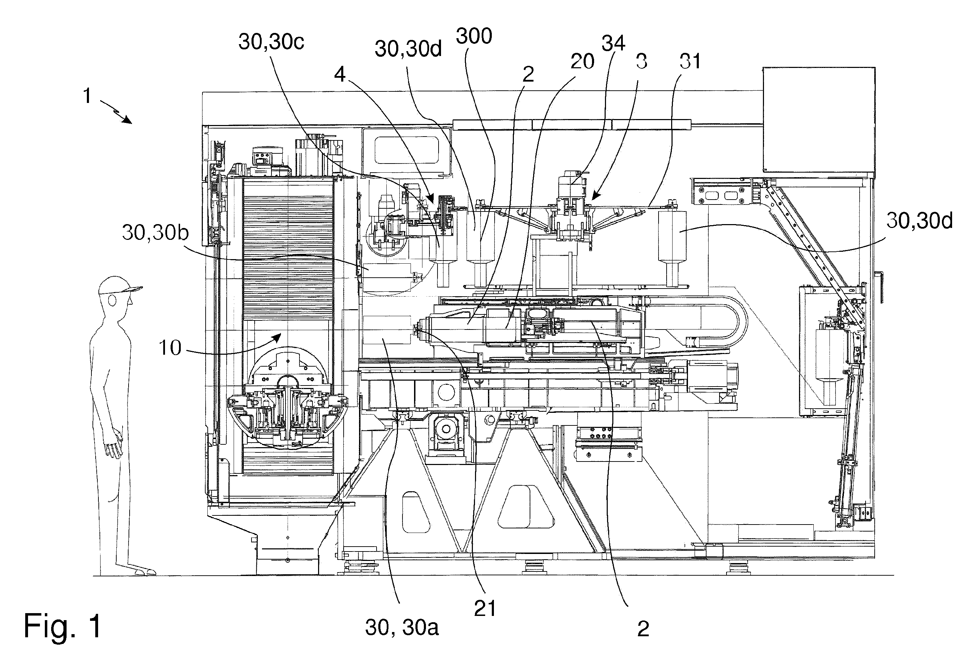

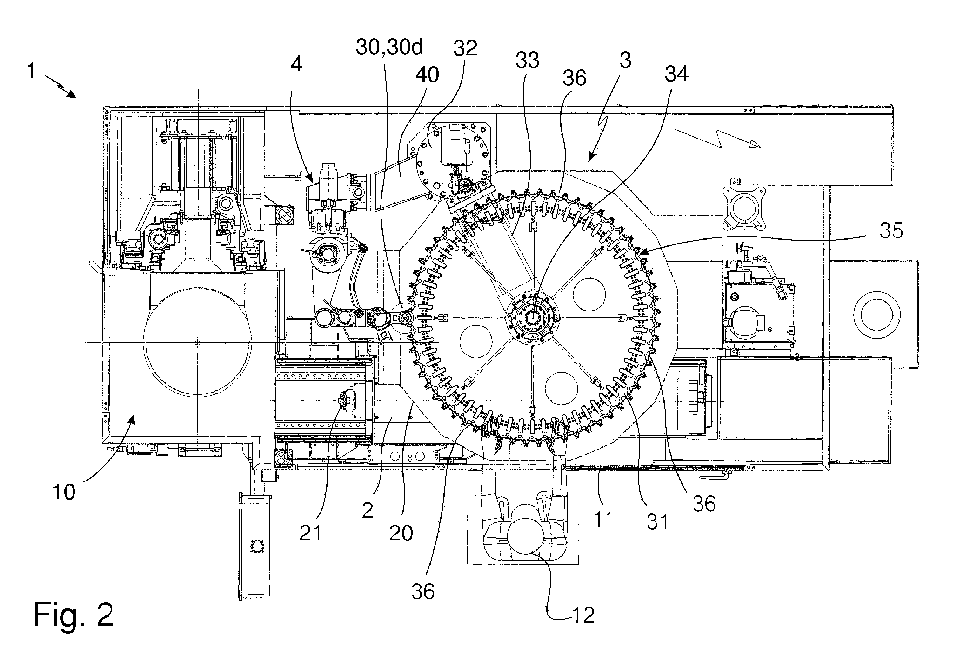

In Fig. 1 und 2 ist ein Ausführungsbeispiel der erfindungsgemäßen Bearbeitungsmaschine 1 gezeigt. Eine solche Bearbeitungsmaschine 1 ist dafür vorgesehen in einem Bearbeitungsraum 10 beliebige Werkstücke, insbesondere zerspanend zu bearbeiten. Hierfür ist eine Motorspindel 2 vorgesehen, die ein einsetzbares Werkzeug 30, 30a um eine Spindelachse 20 rotativ antreibt. Dabei besitzt das Werkzeug 30 eine Werkzeugachse 300, die koaxial mit der Spindelachse 20 ist, wenn das Werkzeug 30 in die Werkzeugaufnahme 21 der Motorspindel 2 eingesetzt ist.

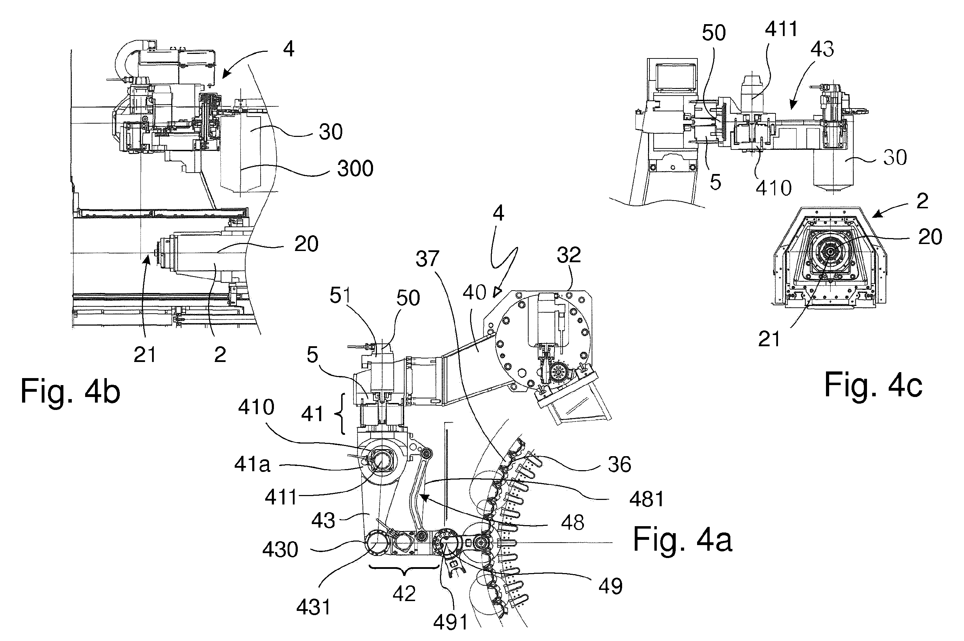

Oberhalb der Motorspindel 2, dies ist insbesondere gut in Figur 1 zu sehen, ist ein Werkzeugmagazin 3 vorgesehen, welches eine Vielzahl von Werkzeugen 30, 30d aufnimmt und vorhält. Das Werkzeugmagazin 3 ist dabei als Magazinscheibe 31 ausgebildet, welches um eine im Wesentlichen vertikal orientierte Drehachse 34 drehbar ist. An dem Scheibenumfang 35 der Magazinscheibe 31 sind eine Vielzahl von Werkzeugaufnahmen 36 vorgesehen, die zur Aufnahme der Werkzeuge 30, 30d dienen. Diese Werkzeugaufnahmen 36 sind dabei zangenartig ausgebildet und umfassen den Schaftbereich des Werkzeuges 30, 30d. Dabei begrenzt die Werkzeugaufnahme 36 eine Aufnahmefläche 37 (siehe Figur 4a), deren Flächennormale parallel zur Drehachse 34 orientiert ist.

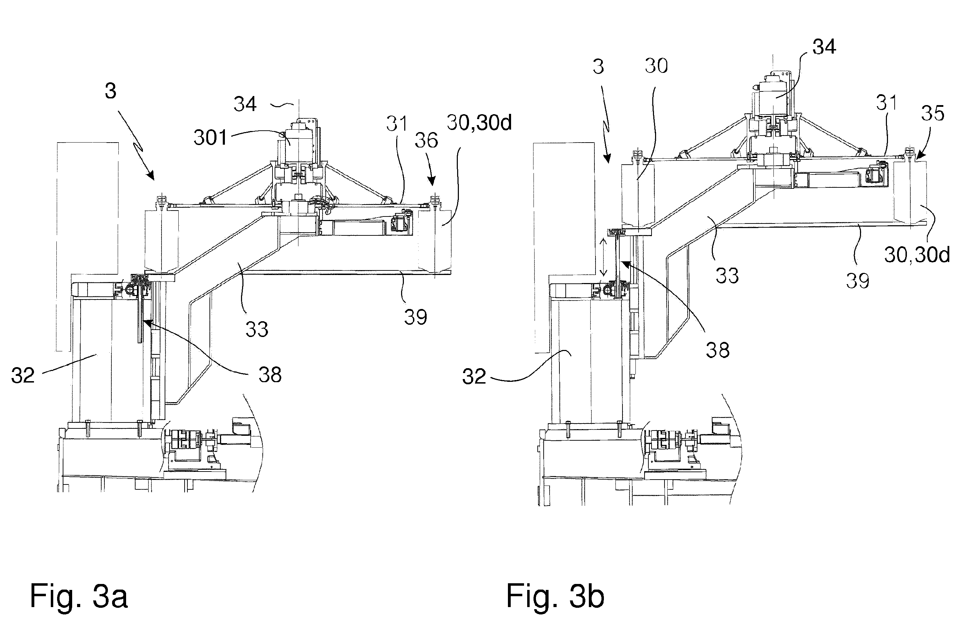

Es ist ein Drehantrieb 301 vorgesehen, der für eine positionierbare Drehbewegung der Magazinscheibe 31 um die Drehachse 34 sorgt, siehe Fig. 3a. Dabei ist ein Tragarm 33 vorgesehen, welcher die Magazinscheibe 31 trägt und an dem zum Beispiel auch der Drehantrieb angeordnet ist. Der im wesentlichen horizontal oder schräg geneigte Tragarm 33 ist auf einer Magazinsäule 32 gelagert, die sich ihrerseits im wesentlichen vertikal erstreckt.

In der Draufsicht nach Figur 2 ist gut zu erkennen, dass die Spindelachse 20 eine Sekante der Magazinscheibe 31 ist. In vertikaler Richtung gesehen befindet sich somit die Magazinscheibe 31 über der Motorspindel 2. Dabei ist die Anordnung geschickterweise so ausgeführt, dass der Scheibenumfang 35 der Magazinscheibe 31 derart an das die Bearbeitungsmaschine 1 beschränkenden Gehäusewand 11 herangeführt ist, damit in diesem Bereich eine leichte Zugänglichkeit zu dem Werkzeugmagazin 3 besteht, was mit der Bedienperson 12 angedeutet ist. Durch eine solche Ausgestaltung wird das Ein- und Auswechseln von Werkzeugen 30 in das Werkzeugmagazin 3 erheblich erleichtert.

Für das Ein- oder Auswechseln von Werkzeugen 30 in die Werkzeugaufnahme 21 der Motorspindel 2 ist eine Werkzeugübergabevorrichtung 4 vorgesehen. In dem hier gezeigten Ausführungsbeispiel befindet sich die Werkzeugübergabevorrichtung 4 zwischen dem Werkzeugmagazin 3 und dem Bearbeitungsraum 10 (und etwas nach oben versetzt). Die Werkzeugübergabevorrichtung 4 ist gebildet von einer Armanordnung, die an einem Armträger 40 gehalten bzw. gelagert ist. Der Armträger 40 seinerseits wird von der (gemeinsamen) Magazinsäule 32 gehalten, der in dem hier gezeigten Ausführungsbeispiel auch die Magazinscheibe 31 trägt.

In Figur 1 ist auch die Werkzeugübergabevorrichtung 4 in zwei verschiedenen Stellungen dargestellt, das durch die von der Werkzeugübergabevorrichtung 4 gehaltenen Werkzeuge 30, 30 c bzw. 30, 30b gezeigt ist. Die Werkzeugübergabevorrichtung 4 ist dabei so ausgebildet, dass es eine Schwenkbewegung des Werkzeuges 30 ausführt: Das in der Magazinscheibe 31 gelagerte Werkzeug 30d besitz in dem hier gezeigten Ausführungsbeispiel eine Werkzeugachse 300, die vertikal orientiert ist. Auch das von der Werkzeugübergabevorrichtung 4 gehaltene Werkzeug 30c (eine erste Stellung der Werkzeugübergabevorrichtung 4) ist vertikal orientiert, in der zweiten Stellung der Werkzeugübergabevorrichtung 4, entsprechend dem Werkzeug 30 b, ist das Werkzeug 30b verschwenkt und die Werkzeugachse 300 dieses Werkzeug 30b jetzt horizontal orientiert.

Figur 3a und 3b zeigt das Werkzeugmagazin 3 nach der Erfindung in zwei verschiedenen Höhenlagen, hierfür weist das Werkzeugmagazin 3 eine Anheb- und/oder Absenkvorrichtung 38 auf. Dabei ist der Tragarm 33 über die Anheb- und/oder Absenkvorrichtung 38 an der Magazinsäule 32 gelagert.

Unterhalb der Magazinscheibe 31 ist eine Tropfwanne 39 vorgesehen, die das Abtropfen von Kühl- bzw. Schmierflüssigkeit und/oder Späne auf die darunter befindliche Motorspindel 2 vermeidet. In dem hier gezeigten Ausführungsbeispiel ist die Tropfwanne 39 am Tragarm 33 gelagert und führt die Anheb- bzw. Absenkbewegung mit aus. Die Tropfwanne 39 kann alternativ aber auch feststehend angeordnet sein.

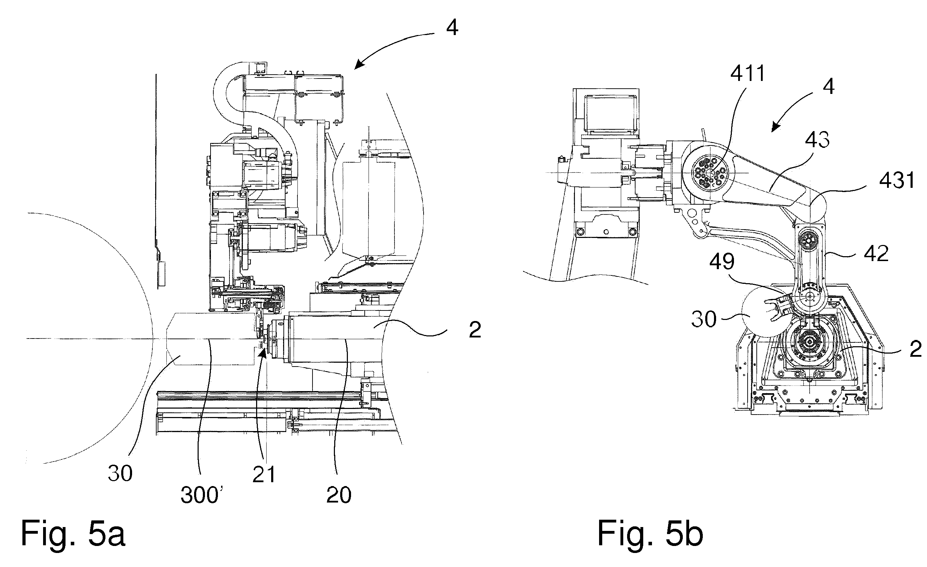

Die Figurensequenz nach Figur 4a, 4b, 4c, 5a, 5b, 6a, 6b zeigt in drei verschiedenen Positionen den Einwechselvorgang eines Werkzeuges 30 aus dem Werkzeugmagazin 3 in die Werkzeugaufnahme 21 der Motorspindel 2. Insbesondere ergibt sich aber aus der Figur 4a und Figur 5b der beispielhafte Aufbau der Werkzeugübergabevorrichtung 4 nach der Erfindung.

In dem in Figur 4a gezeigten Ausführungsbeispiel der Werkzeugübergabevorrichtung 4 ist an der Magazinsäule 32 ein sich im wesentlicher horizontal erstreckender Armträger 40 vorgesehen, der eine aus mehreren Armen 41, 42, 43 gebildete Armanordnung trägt. Dieser Armträger 40 besitzt an seinem, der Magazinsäule 32 abgewandten Ende ein Schwenkgelenk 5. Das Schwenkgelenk 5 umfasst dabei auch einen steuer- und positionierbaren Schwenkantrieb 51. Das Schwenkgelenk 5 trägt an seiner, dem Armträger 40 abgewandten Gelenksseite die Armanordnung, d.h., die gesamte Armanordnung ist um die, in dem hier gezeigten Ausführungsbeispiel horizontal ausgerichteten Schwenkachse 50 schwenkbar. Die Anordnung ist hierbei insbesondere so gewählt, dass die Schwenkachse 50 rechtwinklig orientiert ist zur Drehachse 34 der Magazinscheibe 31 und auch rechtwinklig zur Spindelachse 20, die auch ihrerseits rechtwinklig zur Drehachse 34 ist.

An dem Schwenkgelenk 5 schließt sich dann ein erster, verhältnismäßig kurzer Arm 41 an. Der erste Arm 41 trägt an seinem, dem Schwenkgelenk 5 abgewandten Ende ein erstes Armgelenk 410. Über das Armgelenk 410 ist ein weiterer Arm, hier der dritte Arm 43, mit dem ersten Arm 41 verbunden, der dritte Arm 43 ist dabei um die Armgelenkachse 411 des ersten Armgelenkes 410 verschwenkbar. Die Armgelenkachse 411 steht in dem hier gezeigten Ausführungsbeispiel rechtwinklig zur Schwenkachse 50 des Schwenkgelenkes 5.

Der dritte Arm 43 besitzt an seinem, dem ersten Armgelenk 411 abgewandten Ende ebenfalls ein (zweites) Armgelenk 430, das auf seiner anderer Anschlussseite dem zweiten Arm 42 trägt. Das Armgelenk 430 erlaubt ein Verschwenken des zweiten Armes 42 zu dem dritten Arm 43 um die zweite Armgelenkachse 431. Geschickterweise sind die Armgelenkachse 411 und 431 zueinander parallel.

Zu beachten ist, dass alle Armgelenke 410, 430 je einen steuer- bzw. positionierbaren Antrieb aufweisen, damit die jeweiligen Arme zueinander positioniert (und in dieser Position auch festgehalten) werden können.

Der zweite Arm 42 trägt an seiner, dem Armgelenk 430 abgewandten Seite einen Werkzeugwechsler 49, der aus zwei Werkzeuggreifer besteht, die um das freie Ende des zweiten Armes 42 um eine Verschwenkachse 491 gemeinsam verschwenkbar sind. Die Anordnung von zwei Werkzeuggreifern an dem Werkzeugwechsler 49 hat den Vorzug, dass mit dem ersten Werkzeuggreifer zum Beispiel ein in der Werkzeugaufnahme 21 befindliches Werkzeug 30 aus der Motorspindel 2 aufgenommen werden kann, hernach der Werkzeugwechsler 49 verschwenkt wird, um das neue Werkzeug 30, welches von dem zweiten Werkzeuggreifer gehalten ist, im gleichen Arbeitsschritt, in die Werkzeugaufnahme 21 einzusetzen. Die Verschwenkachse 491 des Werkzeugwechslers 49 ist dabei ebenfalls parallel orientiert zu den Armgelenkachsen 411, 431.

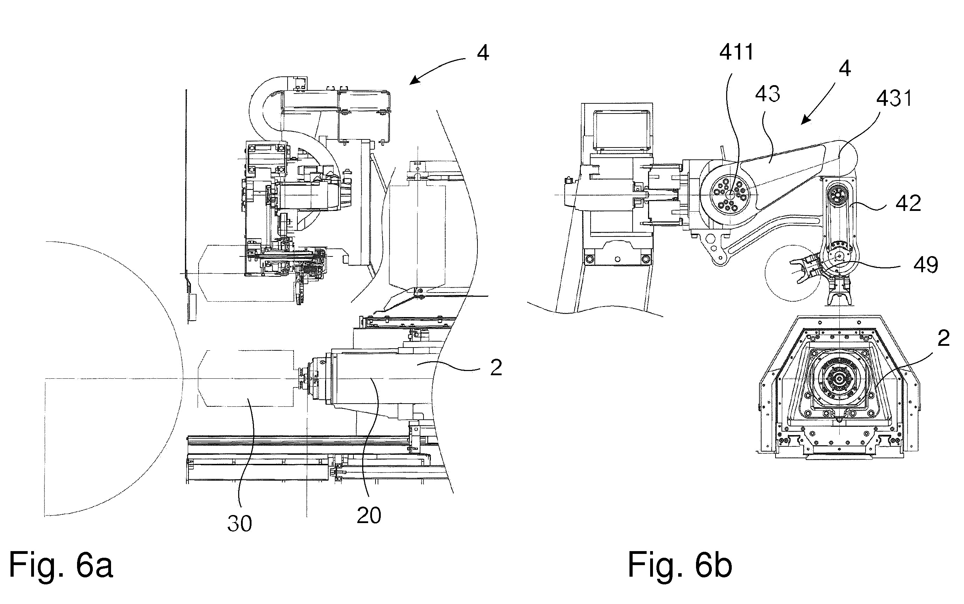

Der dritte Arm 43 ist in dem hier gezeigten Ausführungsbeispiel als Parallelogrammarm 48 ausgebildet, d.h., er weist einen zweiten Armteil 481 auf, der über zusätzliche Gelenke einerseits mit dem dritten Arm 43 und andererseits mit dem zweiten Arm 42 verbunden ist. Hierdurch ist es einfach möglich, eine geradlinige Bewegung des Werkzeugwechslers 49 zu realisieren, vergleiche die unterschiedlichen Stellungen des Werkzeugwechslers 49 in Figur 5b und Figur 6b.

In der Darstellung nach Figur 4c ist das von der Werkzeugübergabevorrichtung 4 gehaltene Werkzeug 30 vertikal orientiert. Zwischen der Darstellung nach Figur 4c und der Darstellung nach Figur 6b erfolgt einerseits ein Verschwenken der gesamten Armanordnung um die Schwenkachse 50 an dem Schwenkgelenk 5, wodurch das Werkzeug 30 aus der vertikalen Lage, wie es in dem Werkzeugmagazin 3 vorgehalten ist, in eine horizontale Lage gebracht wird, um es so in die Werkzeugaufnahme 21 der Motorspindel 2 einzusetzen (siehe horizontale Werkzeugachse 300' in Fig. 5a). Gleichzeitig wird dabei die Armanordnung über die Armgelenke 410 und 430 abgesenkt. Diese Bewegungen werden geschickterweise gleichzeitig ausgeführt (d.h. die Verschwenkbewegung um die Schwenkachse 50 wie auch die Armbewegungen an den Armgelenken 410 und 430).

Nachfolgend werden mögliche Merkmale des Vorschlages strukturiert wiedergegeben. Die nachfolgenden strukturiert wiedergegebenen Merkmale können beliebig untereinander kombiniert werden und können in beliebiger Kombination in die Ansprüche der Anmeldung aufgenommen werden. Dem Fachmann ist klar, dass sich die Erfindung bereits aus dem Gegenstand mit den wenigsten Merkmalen ergibt. Insbesondere sind nachfolgend vorteilhafte oder mögliche Ausgestaltungen, nicht jedoch die einzig möglichen Ausgestaltungen der Erfindung wiedergegeben.

Die Erfindung umfasst eine Werkzeugübergabevorrichtung, welche mindestens einen ersten (41) und einen zweiten Arm (42) aufweist, die durch ein Armgelenk (41a) um eine Armgelenkachse (411) dreh- und positionierbar ist und der zweite Arm (42) einen Werkzeugwechsler (49) trägt, wobei zumindest an einem Arm (41) ein Schwenkgelenk (5) vorgesehen ist, das eine positionierbare Schwenkbewegung um eine Schwenkachse (50) erlaubt und Schwenkachse (50) und Armgelenkachse (411) winklig, insbesondere rechtwinklig zueinander orientiert sind.

Eine wie zuvor ausgeführte Werkzeugübergabevorrichtung, wobei zwischen dem ersten (41) und dem zweiten Arm (42) mindestens ein weiterer, dritter Arm (43) vorgesehen ist, der über ein zweites Armgelenk (430) um eine zweite Armgelenkachse (431) dreh- und positionierbar ist.

Eine wie zuvor ausgeführte Werkzeugübergabevorrichtung, wobei die Armgelenkachsen (411, 431) zueinander parallel orientiert sind.

Eine wie zuvor ausgeführte Werkzeugübergabevorrichtung, wobei die Werkzeugübergabevorrichtung (4) einen Armträger (40) aufweist, der zumindest den ersten Arm (41) trägt und das Schwenkgelenk (5), insbesondere zwischen dem Armträger (40) und dem ersten Arm (41) angeordnet ist.

Eine wie zuvor ausgeführte Werkzeugübergabevorrichtung, wobei zumindest ein Arm, insbesondere der dritte Arm (43), der zwischen dem ersten (41) und zweiten Arm (42) angeordnet ist, als Parallelogrammarm (48) ausgebildet ist.

Eine wie zuvor ausgeführte Werkzeugübergabevorrichtung, wobei an dem Armträger (40) eine Anheb- und Absenkvorrichtung für die Arme (41, 42, 43) vorgesehen ist.

Die Erfindung umfasst des weiteren ein Werkzeugmagazin, zumindest bestehend aus einer um eine vertikal orientierte Drehachse (34) dreh- und positionierbare Magazinscheibe (31), die an ihrem Scheibenumfang (35) eine Mehrzahl von Werkzeugaufnahmen (36) für die Aufnahme von Werkzeugen (30,30d) aufweist.

Ein wie zuvor ausgeführtes Werkzeugmagazin, wobei die Werkzeugaufnahme (36) eine Aufnahmefläche (37) begrenzt, deren Flächennormale parallel, winklig oder rechtwinklig zur Drehachse (34) orientiert sind.

Ein wie zuvor ausgeführtes Werkzeugmagazin, wobei das Werkzeugmagazin (3) zwei oder mehrere, je um dieselbe Drehachse (34), jeweils einzeln, unabhängig voneinander, oder gemeinsam dreh- und positionierbare Magazinscheiben (31) aufweist, welche jeweils gleiche Durchmesser oder von welchen mindestens zwei Magazinscheiben (31) unterschiedliche Durchmesser aufweisen.

Ein wie zuvor ausgeführtes Werkzeugmagazin, wobei sich unterhalb der Magazinscheibe (31) eine Tropfwanne (39) befindet.

Ein wie zuvor ausgeführtes Werkzeugmagazin, wobei das Werkzeugmagazin (3) einen Tragarm (33) aufweist, welcher die mindestens eine Magazinscheibe (30) trägt, und an dem Tragarm (33) eine Anheb- und Absenkvorrichtung (38) für die mindestens eine Magazinscheibe (31) vorgesehen ist.

Die Erfindung umfasst des weiteren eine Bearbeitungsmaschine, insbesondere für die spanende Bearbeitung eines Werkstückes, wobei eine Motorspindel (2) für den rotativen Antrieb eines Werkzeuges (30) um eine Spindelachse (20) vorgesehen ist, und die Bearbeitungsmaschine (1) ein Werkzeugmagazin (3), insbesondere wie vorbeschrieben aufweist, das sich vertikal oberhalb der Motorspindel (2) befindet, und die Bearbeitungsmaschine (1) eine Werkzeugübergabevorrichtung (4), insbesondere wie vorbeschrieben aufweist, die dazu vorgesehen ist, ein Werkzeug (30) von dem Werkzeugmagazin (3) zur Werkzeugaufnahme (21) der Motorspindel (2) und/oder zurück zu transportieren.

Eine wie zuvor ausgeführte Bearbeitungsmaschine, wobei in vertikaler Richtung gesehen, die Spindelachse (20) eine Sekante der Magazinscheibe (31) des Werkzeugmagazins (3) ist.

Eine wie zuvor ausgeführte Bearbeitungsmaschine, wobei sich die Werkzeugübergabevorrichtung (4) zwischen dem Bearbeitungsraum (10) der Bearbeitungsmaschine (1) einerseits und der Spindel (2) und Werkzeugmagazin (3) andererseits befindet.

Eine wie zuvor ausgeführte Bearbeitungsmaschine, wobei eine Magazinsäule (32) oder ein Magazinportal vorgesehen ist, die/das den Tragarm (33) des Werkzeugmagazins (3) und den Armträger (40) der Werkzeugübergabevorrichtung (4) trägt.

Eine wie zuvor ausgeführte Bearbeitungsmaschine, wobei die Bearbeitungsmaschine (1) zwei Motorspindeln (2) aufweist, deren Spindelachsen parallel orientiert sind.

Eine wie zuvor ausgeführte Bearbeitungsmaschine, wobei für eine Zuführbewegung eines Werkzeuges (30) von dem Werkzeugmagazin (3) zu der Werkzeugaufnahme (21) der Motorspindel (2) eine Überlagerung mindestens zweier der nachfolgenden Bewegungen vorgesehen sind:
- der Bewegung der Arme (41, 42, 43) um die Armgelenkachsen (411, 431),
- der Schwenkbewegung um die Schwenkachse (50),
- der Anheb- oder Absenkbewegung der Anheb- und Absenkvorrichtung (38).

Ein wie zuvor ausgeführtes Bearbeitungsmaschine, wobei die Schwenkachse (50), die Drehachse (34) und die Spindelachse (20) je zueinander rechtwinklig orientiert sind.

Die jetzt mit der Anmeldung und später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Werkzeugübergabevorrichtung, welche mindestens einen ersten (41) und einen zweiten Arm (42) aufweist, die durch ein Armgelenk (41a) um eine Armgelenkachse (411) dreh- und positionierbar ist und der zweite Arm (42) einen Werkzeugwechsler (49) trägt, **dadurch gekennzeichnet, dass** zumindest an einem Arm (41) ein Schwenkgelenk (5) vorgesehen ist, das eine positionierbare Schwenkbewegung um eine Schwenkachse (50) erlaubt und Schwenkachse (50) und Armgelenkachse (411) winklig, insbesondere rechtwinklig zueinander orientiert sind.

2. Werkzeugübergabevorrichtung nach Anspruch 1, **dadurch gekennzeichnet, dass** zwischen dem ersten (41) und dem zweiten Arm (42) mindestens ein weiterer, dritter Arm (43) vorgesehen ist, der über ein zweites Armgelenk (430) um eine zweite Armgelenkachse (431) dreh- und positionierbar ist, wobei insbesondere die Armgelenkachsen (411, 431) zueinander parallel orientiert sind.

3. Werkzeugübergabevorrichtung nach Anspruch 1 oder 2, **dadurch gekennzeichnet, dass** die Werkzeugübergabevorrichtung (4) einen Armträger (40) aufweist, der zumindest den ersten Arm (41) trägt und das Schwenkgelenk (5), insbesondere zwischen dem Armträger (40) und dem ersten Arm (41) angeordnet ist.

4. Werkzeugübergabevorrichtung nach einem der vorhergehenden Ansprüche, **dadurch gekennzeichnet, dass** zumindest ein Arm, insbesondere der dritte Arm (43), der zwischen dem ersten (41) und zweiten Arm (42) angeordnet ist, als Parallelogrammarm (48) ausgebildet ist.

5. Werkzeugübergabevorrichtung nach einem der vorhergehenden Ansprüche, **dadurch gekennzeichnet, dass** an dem Armträger (40) eine Anheb- und Absenkvorrichtung für die Arme (41, 42, 43) vorgesehen ist.

6. Werkzeugmagazin, zumindest bestehend aus einer um eine vertikal orientierte Drehachse (34) dreh- und positionierbare Magazinscheibe (31), die an ihrem Scheibenumfang (35) eine Mehrzahl von Werkzeugaufnahmen (36) für die Aufnahme von Werkzeugen (30,30d) aufweist.

7. Werkzeugmagazin nach Anspruch 6, **dadurch gekennzeichnet, dass** die Werkzeugaufnahme (36) eine Aufnahmefläche (37) begrenzt, deren Flächennormale parallel, winklig oder rechtwinklig zur Drehachse (34) orientiert ist.

8. Werkzeugmagazin nach Anspruch 6 oder 7, **dadurch gekennzeichnet, dass** das Werkzeugmagazin (3) zwei oder mehrere, je um dieselbe Drehachse (34), jeweils einzeln, unabhängig voneinander, oder gemeinsam dreh- und positionierbare Magazinscheiben (31) aufweist, welche jeweils gleiche Durchmesser oder von welchen mindestens zwei Magazinscheiben (31) unterschiedliche Durchmesser aufweisen.

9. Werkzeugmagazin nach einem der Ansprüche 6 bis 8, **dadurch gekennzeichnet, dass** sich unterhalb der Magazinscheibe (31) eine Tropfwanne (39) befindet und/oder das Werkzeugmagazin (3) einen Tragarm (33) aufweist, welcher die mindestens eine Magazinscheibe (31) trägt, und an dem Tragarm (33) eine Anheb- und Absenkvorrichtung (38) für die mindestens eine Magazinscheibe (31) vorgesehen ist.

10. Bearbeitungsmaschine, insbesondere für die spanende Bearbeitung eines Werkstückes, wobei eine Motorspindel (2) für den rotativen Antrieb eines Werkzeuges (30) um eine Spindelachse (20) vorgesehen ist, und die Bearbeitungsmaschine (1) ein Werkzeugmagazin (3), insbesondere nach einem der vorhergehenden Ansprüche aufweist, das sich vertikal oberhalb der Motorspindel (2) befindet, und die Bearbeitungsmaschine (1) eine Werkzeugübergabevorrichtung (4), insbesondere nach einem der vorhergehenden Ansprüche 1 bis 3 aufweist, die dazu vorgesehen ist, ein Werkzeug (30) von dem Werkzeugmagazin (3) zur Werkzeugaufnahme (21) der Motorspindel (2) und/oder zurück zu transportieren.

11. Bearbeitungsmaschine nach Anspruch 10, **dadurch gekennzeichnet, dass** in vertikaler Richtung gesehen, die Spindelachse (20) eine Sekante der Magazinscheibe (31) des Werkzeugmagazins (3) ist.

12. Bearbeitungsmaschine nach Anspruch 10 oder 11, **dadurch gekennzeichnet, dass** sich die Werkzeugübergabevorrichtung (4) zwischen dem Bearbeitungsraum (10) der Bearbeitungsmaschine (1) einerseits und der Spindel (2) und Werkzeugmagazin (3) andererseits befindet.

13. Bearbeitungsmaschine nach einem der Ansprüche 10 bis 12, **dadurch gekennzeichnet, dass** eine Magazinsäule (32) oder ein Magazinportal vorgesehen ist, die/das den Tragarm (33) des Werkzeugmagazins (3) und den Armträger (40) der Werkzeugübergabevorrichtung (4) trägt.

14. Bearbeitungsmaschine nach einem der vorhergehenden Ansprüche 10 bis 13, **dadurch gekennzeichnet, dass** die Bearbeitungsmaschine (1) zwei Motorspindeln (2) aufweist, deren Spindelachsen parallel orientiert sind.

15. Bearbeitungsmaschine nach einem der Ansprüche 10 bis 14, **dadurch gekennzeichnet, dass** für eine Zuführbewegung eines Werkzeuges (30) von dem Werkzeugmagazin (3) zu der Werkzeugaufnahme (21) der Motorspindel (2) eine Überlagerung mindestens zwei der nachfolgenden Bewegungen vorgesehen sind:
- der Bewegung der Arme (41, 42, 43) um die Armgelenkachsen (411, 431),
- der Schwenkbewegung um die Schwenkachse (50),
- der Anheb- oder Absenkbewegung der Anheb- und Absenkvorrichtung (38).
